# EUROPEAN PATENT SPECIFICATION

(11) **EP 1 666 950 B1**
(45) Date of publication and mention of the grant of the patent: **01.04.2009**
(21) Application number: 05111009.6
(22) Date of filing: 21.11.2005
(51) Int. Cl.: G02B 27/22, H04N 13/00

(54) **Parallax barrier for an autostereoscopic display**
Parallaxbarriere für eine autostereoskopische Anzeigevorrichtung
Barrière à parallaxe pour un afficheur autostereoscopique

(30) Priority: 29.11.2004 US 631194; 04.04.2005 KR 2005028065
(43) Date of publication of application: 07.06.2006
(73) Proprietor: Samsung Electronics Co., Ltd, Suwon-si, Gyeonggi-do 442-742 (KR)
(72) Inventor: Chestak, Serguei, Gyeonggi-Do (KR); Kim, Dae-sik, Gyeonggi-do (KR)
(74) Representative: Read, Matthew Charles

(56) References cited:
- EP-A- 1 396 749
- EP-A- 1 406 163
- US-A1- 5 825 541
- US-B1- 6 195 205

## Description

The invention relates to an autostereoscopic display that can be switched between three dimensional (3D) and two dimensional (2D) modes of operation.

In general, autostereoscopic displays are used in game machines, computer monitors, notebook displays, mobile phones, and other applications to produce stereoscopic images.

Autostereoscopic displays are typically mechanically switched between a two dimensional (2D) mode and a three dimensional (3D) mode to selectively provide a 2D image or a 3D image according to an image signal. Various types of switchable autostereoscopic displays have been developed.

For example, U.S. Patent No. 5,500,765, entitled "Convertible 2D/3D autostereoscopic display" and invented by Eichenlaub, discloses a 2D/3D switchable autostereoscopic display comprising a lenticular parallax element, wherein switching from the 3D mode to the 2D mode is achieved by attaching a complementary lenticular sheet having a negative refractive power to the lenticular parallax element, which has a positive refractive power. The attached complementary lenticular sheet compensates for the optical power of the lenticular parallax element, so that a 2D image can be seen with full resolution on an image panel. To provide the 2D/3D switching, the conventional display has the screen sized complementary lenticular sheet mounted on hinges, which allow the complementary lenticular sheet to be attached and detached by rotation. Accordingly, this prior display is complex in structure and the complementary lenticular sheet, which is rotated on the hinges, requires a large amount of free space within and around the display, thereby increasing the overall size of the display.

U.S. Patent No. 6,437,915, entitled "Parallax barrier, display, passive polarization modulating optical element, and method of making such an element" and invented by Moseley et al., discloses another 2D/3D switchable display based on a latent parallax barrier, which is activated by attaching a polarizer sheet to a display screen.

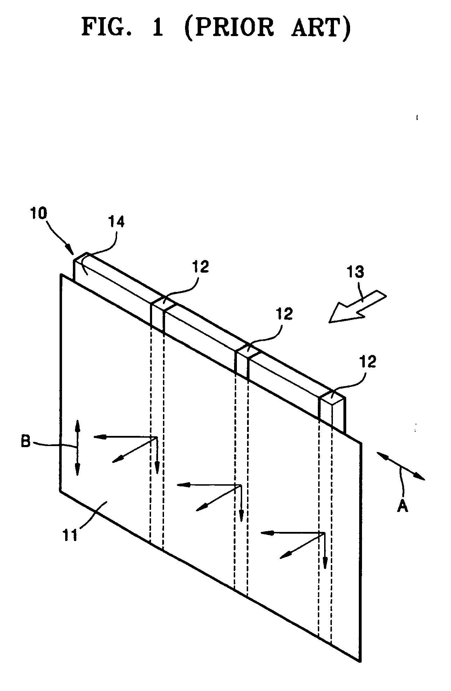

Figure 1 is a perspective view of the switchable parallax barrier with removable polarization sheet as disclosed in U.S. Patent No. 6,437,915. Referring to Figure 1, the parallax barrier of the display includes a polarization modifying layer 10, and a polarizer in the form of a polarization sheet 11. The polarization modifying layer 10 includes aperture regions 12 in the form of parallel elongate slit regions arranged to rotate the polarization of incoming linearly polarized light 13 by 90 degrees. The aperture regions 12 are separated by barrier regions 14, which are arranged so that they do not affect the polarization of the incoming light 13.

When this prior parallax barrier is disposed in front of a liquid crystal display (LCD) of a thin film transistor (TFT) type, light output from the LCD is polarized in a direction indicated by arrow A.

The polarization sheet 11 has a polarization direction indicated by arrow B, which is perpendicular to a polarization direction A of the incident light 13. However, the polarization direction B is parallel to the polarization direction of light emerging from the aperture regions 12 such that the parallax barrier operates in a barrier mode and incident light is transmitted through the aperture regions 12 while being substantially blocked or extinguished at parts of the parallax barrier defined by the barrier regions 14. In order to operate the parallax barrier in a non-barrier mode, the polarization sheet 11 is disabled, for instance, by being removed. In the non barrier-mode, the aperture regions 12 are substantially invisible because the light emerging therefrom is not analyzed by the polarization sheet 11.

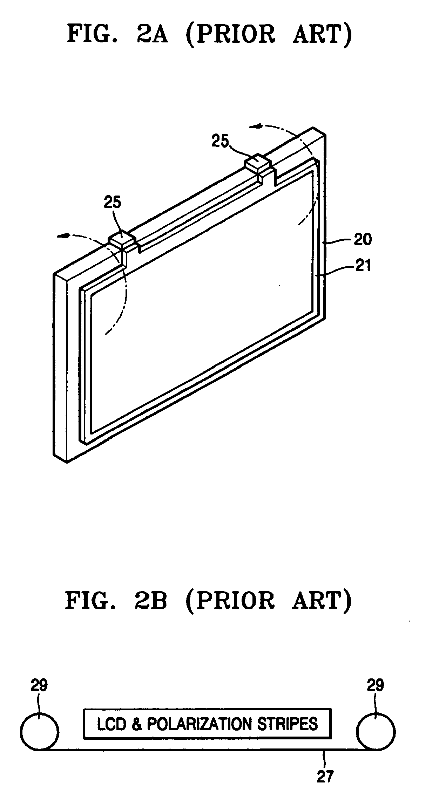

Figures 2A through 2C illustrate conventional arrangements of a polarization sheet and parallax barrier.

Referring to Figure 2A, a polarization sheet 21 is attached to a stereoscopic display 20 by double hinges 25. This allows the polarization sheet 21 to be rotated over the front of the display 20. In this case, it is necessary to provide space for moving the polarization sheet 21 mounted on the hinges 25, resulting in a bulky and complex structure.

Referring to Figure 2B, a polarization sheet is formed on a transparent film 27 having a longitudinal region which is transparent and non-polarizing. The transparent film 27 is wound on rollers 29 that are disposed on either side of a LCD and a polarization modifying layer. The rollers 29 are driven, for instance by an electric motor, so that a polarizing region of the polarization sheet or the transparent non-polarizing region of the film 27 may be disposed in front of the LCD.

In such an arrangement, the rollers 29 and the electric motor for driving the rollers 29 should be disposed on a body of the conventional display. Consequently, the resulting display is complex and difficult to use.

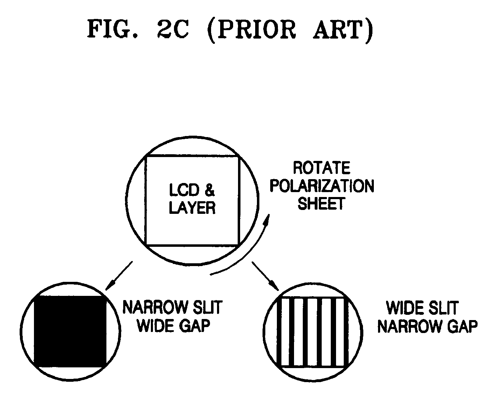

Figure 2C illustrates another arrangement for switching between the 3D and 2D modes of operation. Referring to Figure 2C, a polarization sheet is installed in front of a LCD, and a layer. The polarization sheet is disposed to be rotatable about an axis perpendicular thereto.

The display disclosed in U.S. Patent No. 6,437,915 can switch between the 2D and 3D modes by rotating or rolling the polarization sheet 11. However, in this case, the overall size of the display is significantly larger than the size of the display screen. The rotation of the polarization sheet 11 also requires a large amount of free space around the display screen and does not provide complete invisibility of the conventional parallax barrier structure.

U.S. Patent No. 5,825,541 discloses a stereoscopic display system, in which a shifter is controlled to shift a first parallax barrier by half a pitch of stripe regions with respect to a second parallax barrier such that a display behind the barrier is visible alternatively to the left eye and right eye of the observer, while the display is controlled to alternatively display the left eye and right eye pictures in synchronism with the operation of the shifter. 2-D operation of the display is achieved by physically removing the entire parallax barrier unit from the display.

U.S. Patent No. 6,195,205 discloses a multimode stereoscopic imaging system which is convertible back and forth from the auto stereo viewing mode without glasses to the binocular stereo viewing mode with glasses.

According to the invention, there is provided an autostereoscopic display according to claim 1.

One object of the invention is the provision of a 2D/3D switchable autostereoscopic display which can switch between a 3D mode and a 2D mode with full resolution using minimal movement, that may potentially provide a display of smaller overall size, or reduced requirements for surrounding free space, when compared with the prior art arrangements discussed above.

The first aspect of the invention provides an autostereoscopic display according to claim 1.

The first and second images may be a left-eye image and a right-eye image respectively.

This aspect also provides a mobile telephone comprising such an autostereoscopic display.

According to an embodiment of the invention, an autostereoscopic display according to claim 1 comprises a first birefringent array and a second birefringent array disposed to face the first birefringent array, and a relative positioning unit to displace one of the first and second birefringent arrays along a displacement axis that is parallel to both the first and second birefringent arrays.

According to a further embodiment of the invention, the parallax barrier unit usable with an autostereoscopic display comprises an analyzer to transmit incident light having a predetermined analyzer polarization, and at least one birefringent element to receive incident light, to transform a polarization of the incident light to one of the predetermined analyzer polarization, and a predetermined blocked polarization, and to provide the light having the transformed polarization to the analyzer.

According to a further embodiment of the invention, a 2D/3D switch usable with the autostereoscopic display comprises a first birefringent array and a second birefringent array disposed to face the first birefringent array, and a relative positioning unit to displace one of the first and second birefringent arrays along a displacement axis that is parallel to both the first and second birefringent arrays.

According to a further embodiment of the invention, a method of switching between a 3D mode and a 2D mode in an autostereoscopic display comprises receiving polarized light, and controlling a relative positioning of two birefringent arrays such that, in a first operational mode, all the received light passes through the two birefringent arrays and emerges therefrom with a polarization transformed to a predetermined output polarization and, in a second operational mode, a first portion of all the received light passes through the two birefringent arrays and emerges therefrom with a polarization transformed to a predetermined blocked polarization and a second portion of all the received light passes through the two birefringent arrays and emerges therefrom with polarization transformed to the predetermined output polarization.

Embodiments of the invention will now be described, by way of example, with reference to the accompanying drawings, of which:
Figure 1 is a perspective view illustrating a conventional on-off switchable parallax barrier that uses a removable polarization sheet;
Figures 2A through 2C illustrate a variety of mechanical designs for the conventional on-off switchable parallax barrier;
Figures 3A through 3F are perspective views illustrating an autostereoscopic display according to an embodiment of the invention, Figures 3A and 3B illustrating the autostereoscopic display respectively in a three dimensional (3D) mode and a two dimensional (2D) mode, Figures 3C and 3D illustrating an array of rotators in the 3D mode and the 2D mode respectively andFigures 3E and 3F illustrating an array of retarders in the 3D mode and the 2D mode respectively;
Figures 4A and 4B illustrate birefringent elements of first and second arrays of the autostereoscopic display of Figures 3A through 3F according to various embodiments of the invention;
Figures 5A and 5B are perspective views illustrating an autostereoscopic display, respectively in the 3D mode and the 2D mode according to another embodiment of the present general inventive concept;
Figures 6A and 6B are cross-sectional views illustrating an optical arrangement of the autostereoscopic display of Figures 5A and 5B and a liquid crystal display (LCD), in the 3D mode and the 2D mode respectively;
Figures 7A and 7B are cross-sectional views illustrating an optical arrangement of the autostereoscopic display of Figures 3A and 3B and an LCD, in the 3D mode and the 2D mode respectively;
Figures 8A and 8B are cross-sectional views illustrating an alternative optical arrangement for the autostereoscopic display of Figures 3A and 3B and a LCD, in the 3D mode and the 2D mode respectively;
Figure 9A illustrates a mechanism to manually control a first array and a second array using a 2D/3D switch according to an embodiment of the invention; and
Figure 9B illustrates an amount by which the second array is shifted by the 2D/3D switch of Figure 9A.

In the following detailed description, like reference numerals refer to the like elements throughout.

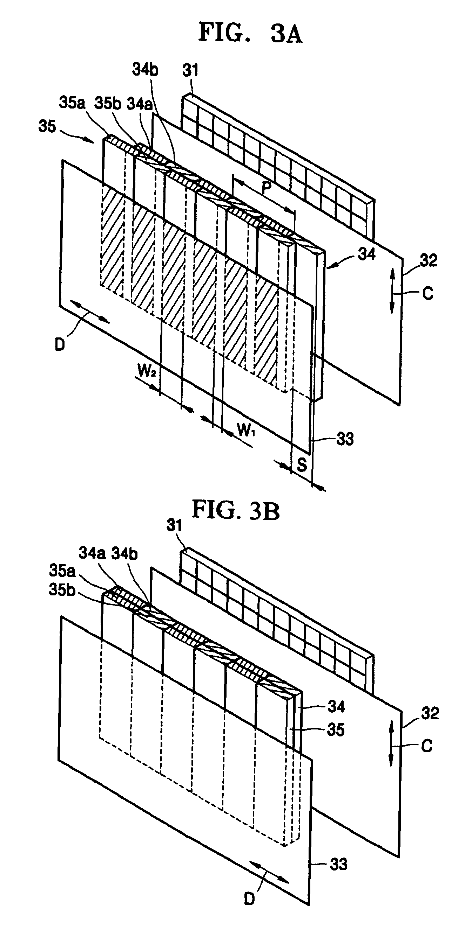

Referring to Figure 3A, an autostereoscopic display according to an embodiment of the invention includes a display device 31 arranged to display an image, including pixels in a row and column array, and a parallax barrier unit arranged to transmit all incident light in the 2D mode and to separate a left-eye image and a right-eye image by forming a barrier in the 3D mode.

The parallax barrier unit includes a polarizer 32, an analyzer 33, and first and second arrays 34 and 35 disposed between the polarizer 32 and the analyzer 33. At least one of the first and second arrays 34 and 35 is movable, such that a 2D image or a 3D image can be selectively displayed by adjusting the relative positions of the first and second arrays 34 and 35.

The polarizer 32 is disposed in the optical path of an image displayed by the display device 31 and transmits light having a predetermined polarization direction C. Accordingly, when non-polarized light is incident on the polarizer 32, the polarizer 32 transmits only light having the polarization direction C, such that the light emerging from the polarizer 32 is linearly polarized.

Each of the first and second arrays 34 and 35 includes birefringent elements, which may be rotators or retarders. In this particular example, the first array 34 includes a plurality of first and second birefringent elements 34a and 34b each having a stripe shape with a predetermined width, and the first and second birefringent elements 34a and 34b alternate with each other.

If the first and second birefringent elements 34a and 34b are rotators (i.e., circular birefringent elements), the first and second birefringent elements 34a and 34b rotate incident light by +(2n+1)×45° and -(2n+1)×45°, respectively, where n=0, 1, 2, 3 ....

On the other hand, if the first and second birefringent elements 34a and 34b are retarders (i.e., linear birefringent elements), the first and second birefringent elements 34a and 34b shift the phase of the incident light by +(2n+1)λ/4 and - (2n+1)λ/4, respectively. Here, λ denotes a wavelength of the incident light and n=0, 1, 2, 3, .... When n=0, the rotators may rotate the incident light by +45° and the retarders may phase-shift the incident light by λ/4. In this case, the rotators or the retarders can maintain their properties over a wide spectral range and exhibit high tolerance with respect to an angle of incidence.

The second array 35 includes third and fourth birefringent elements 35a and 35b. In this example, the third and fourth birefringent elements 35a, 35b each have a stripe shape with a predetermined width, and alternate with each other. Each of the third and fourth birefringent elements 35a and 35b may be rotators (i.e., circular birefringent elements), or retarders (i.e., linear birefringent elements), similar to the first and second birefringent elements 34a and 34b.

The display mode can be selected from a 2D mode or a 3D mode by adjusting the relative positions of the first and second arrays 34 and 35. For example, the position of the first array 34 may be fixed while the second array 35 may be moved horizontally, so that a position of the second array 35 can be switched between a first position illustrated in Figure 3A and a second position illustrated in Figure 3B. In the first position, the boundaries between the first and second birefringent elements 34a and 34b of the first array 34 are not aligned with corresponding boundaries between the third and fourth birefringent elements 35a and 35b of the second array 35. As a result, the first and second arrays 34, 35 form a parallax barrier due to an operation principle to be described below, thereby permitting operation in the 3D mode.

In the second position, however, the boundaries between the first and second birefringent elements 34a and 34b of the first array 34 are aligned with the boundaries between the third and fourth birefringent elements 35a and 35b of the second array 35 to transmit the entirety of the images displayed by the display device 31, thereby permitting operation in the 2D mode.

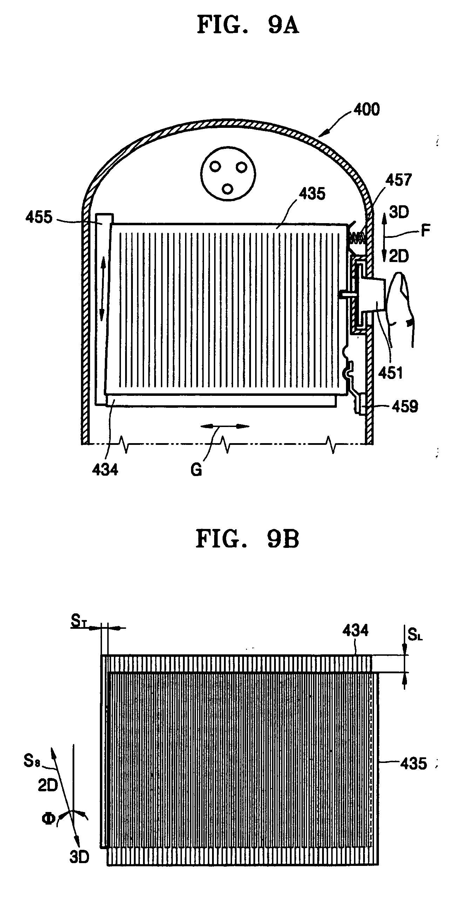

In this particular example, each of the first through fourth birefringent elements 34a, 34b, 35a, and 35b of the first and second arrays 34 and 35 has the form of a stripe extending along a first direction that is parallel to the polarization direction C of the polarizer 32. The first and second arrays 34 and 35 may be arranged so that they can be shifted relative to one another in a direction slanted at a first inclination angle Φ (see Figure 9B) with respect to the first direction in which the first, second, third, and fourth birefringent elements 34a, 34b, 35a, and 35b are arranged so that, when modes are switched manually, an effective displacement of the second array 35 relative to the first array 34 can be smaller than the required displacement of a mode switch when the second array 35 is shifted as illustrated in Figure 3A.

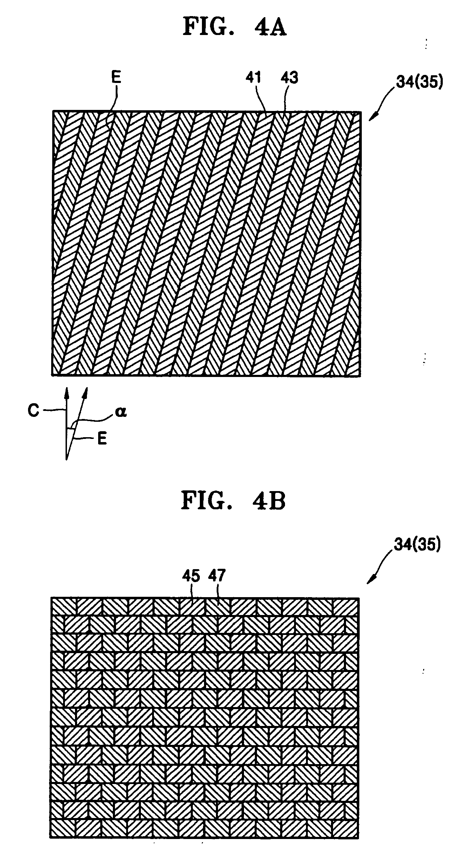

It should be understood that the birefringent elements of the first and second arrays 34 and 35 are not intended to be limited to those arrangements illustrated in Figures 3A and 3B and described above, and may have other, alternative, arrangements. Examples of alternative arrangements for the birefringent elements of the first and second arrays 34, 35 are illustrated in Figures 4A and 4B.

Referring to Figure 4A, the birefringent elements 41 and 43 of the first and second arrays 34 and 35 have stripe shapes and are characterized by opposite polarization directions or opposite retardation directions. The birefringent elements 41 and 43 extend along a second direction E that is slanted at a second inclination angle "α" with respect to the polarization direction C of the polarizer 32. In this case, the first and second arrays 34 and 35 are shifted relative to one another in a third direction slanted at a third inclination angle (not shown), with respect to the polarization direction C of the polarizer 32, which is different from the second inclination angle "α".

In the arrangement shown in Figure 4B, the first and second arrays 34 and 35 are arranged in a stepwise manner and include two dimensional birefringent elements 45 and 47.

In the first and second arrays 34 and 35 illustrated in Figures 4A and 4B, when polarization rotators are used as the birefringent elements, the birefringent elements 41 and 45 rotate a polarization direction of the incident light by +(2n+1)×45°, and the adjacent birefringent elements 43 and 47 rotate the polarization direction of the incident light by -(2n+1)×45°, where n=0, 1, 2, 3 .... When polarization retarders are used as the birefringent elements, the birefringent elements 41 and 45 phase-shift the incident light by +(2n+1)λ/4, and the adjacent birefringent elements 43 and 47 phase-shift the incident light by -(2n+1)λ/4, where λ denotes a wavelength of the incident light and n=0, 1, 2, 3,

The analyzer 33 faces the second array 35 and transmits only light emerging from the second array 35 having a predetermined polarization.

The polarization directions of the polarizer 32 and the analyzer 33 may be either parallel or perpendicular to each other. In the example arrangements show in Figures 3A to 3F, the polarization directions of the polarizer 32 and the analyzer 33 are perpendicular to each other. That is, the polarization direction C of the polarizer 32 is parallel to a vertical direction of the display device 31, and a polarization direction indicated by arrow D of the analyzer 33 is parallel to a horizontal direction of the display device 31.

Operation of the autostereoscopic display according to the present embodiment will now be explained in detail with reference to Figures 3A through 3F.

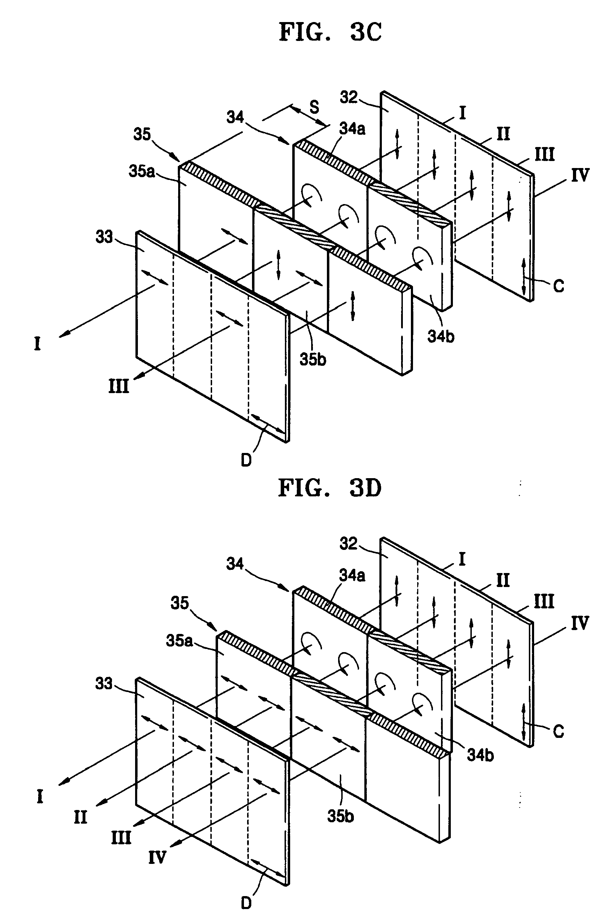

Referring to Figures 3A to 3D, the first and third birefringent elements 34a and 35a are +45° rotators, and the second and fourth birefringent elements 34b and 35b are -45° rotators. In particular, Figures 3A and 3C illustrate the first and second arrays 34 and 35 in the 3D mode, and Figures 3B and 3D illustrate the first and second arrays 34 and 35 in the 2D mode.

Referring to Figures 3A and 3C, light emitted from the display device 31 is polarized in the vertical direction C by the polarizer 32. Part I of the light polarized in the vertical direction C is transmitted through the first birefringent elements 34a of the first array 34 and, as a result, the polarization direction of the part I is rotated by +45°. Subsequently, the part I of the light is then transmitted through the third birefringent elements 35a of the second array 35, such that the polarization direction of the part I of the light is rotated further by +45°. As a result of the combined action of the first and third birefringent elements 34a, 35a, the polarization direction of the part I of the vertically polarized light is rotated by 90° so that the part I of the light is transmitted through the analyzer 33.

Part II of the vertically polarized light is transmitted through the first birefringent elements 34a of the first array 34 and the fourth birefringent elements 35b of the second array 35. Part IV of the vertically polarized light is transmitted through the second birefringent elements 34b of the first array 34 and the third birefringent elements 35a of the second array 35. Accordingly, since the polarization direction of the part II of the light is rotated by +45° by the first birefringent elements 34a and -45° by the fourth birefringent elements 35b and the polarization direction of the part IV of the light is rotated by -45° by the second birefringent elements 34b and +45° the third birefringent elements 35a, the actions of the first and second arrays 34, 35 compensate each other and thus the parts II and IV of the light reach the analyzer 33 without any overall change in their polarization. Hence, in the 3D mode, since the parts II and IV of the light have polarization directions that are perpendicular to the polarization direction D of the analyzer 33, the parts II and IV are blocked by the analyzer 33 when the display is operating in the 3D mode.

Part III of the vertically polarized light is transmitted through the second birefringent elements 34b of the first array 34, such that the polarization direction of the vertically polarized light III is rotated by -45°. Subsequently, the part III of the light is transmitted through the fourth birefringent elements 35b of the second array 35, such that the polarization direction of the part III is further rotated by -45°. As a result of the combined action of the second and fourth birefringent elements 34b, 35b, the polarization direction of the part III of the light is rotated by -90°. Since the polarization direction of the part III of the light is the same as the polarization direction D of the analyzer 33, the part III of the light can be transmitted through the analyzer 33 when the display is operating in the 3D mode.

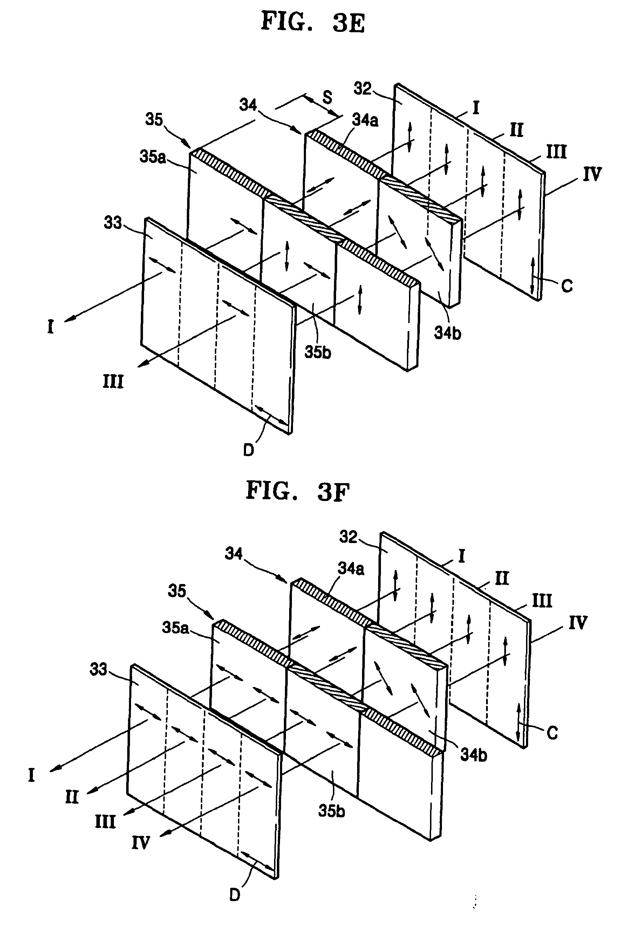

As described above, by shifting the first and second arrays 34 and 35 by a distance S, as shown in Figures 3A, 3C, and 3E, incident light is transmitted through portions Wi, and is blocked from transmission through portions W₂. Accordingly, the portions W₂ may function as a parallax barrier. The portions W₂ may have a width equal to half of a pitch P of the birefringent arrays. The widths of the portions W1 and W₂ can be determined according to the distance S between the first array 34 and the second array 35, and taking into account the loss of light and crosstalk between left-eye images and right-eye images.

Since the basic principle and calculation of the parallax barrier should be known by one of ordinary skill in the art, as disclosed in "Theory of Parallax Barriers" of S.H. Kaplan, Journal of the SMPTE, Vol. 59, pp 11-21 (1952), a detailed explanation thereof will not be provided herein.

In Figures 3B and 3D, the first and second arrays 34 and 35 are aligned with each other to realize a full resolution 2D mode. Hence, light emitted from the display device 31 is polarized by the polarizer 32 and is transmitted through the first and second arrays 34 and 35 so that its polarization direction isrotated by +90° or - 90°. the In this manner, the polarization direction of the light is made the same as the polarization direction D of the analyzer 33. As a result, all light incident on the analyzer 33 is transmitted through the analyzer 33.

The first array 34 and the second array 35 may be shifted relative to one another manually or with an electromechanical or piezoelectric actuator. The manual operation may be performed by a user, as described below. However, other methods/structures may also be used to shift the first and/or second arrays 34 and 35.

In the arrangement shown in Figures 3E and 3F, the first and third birefringent elements 34a and 35a are +λ/4 retarders and the second and fourth birefringent elements 34b and 35b are -λ/4 retarders.

Figure 3E illustrates the first and second arrays 34 and 35 when the display is operating in the 3D mode, and Figure 3F illustrates the first and second arrays 34 and 35 when the display is operating in the 2D mode. The first and second arrays 34 and 35 are shifted relative to one another in the same manner as described above with respect to Figures 3C and 3D, to realize a 3D image or a full resolution 2D image by selectively forming a parallax barrier.

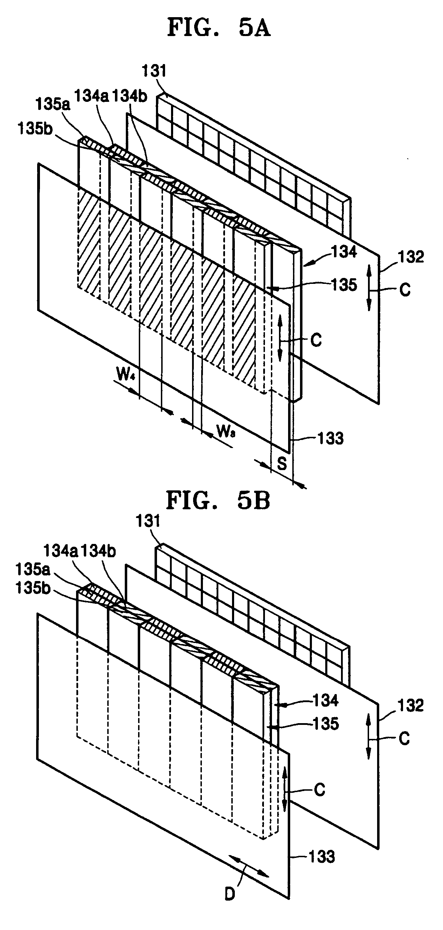

Figures 5A and 5B are perspective views illustrating an autostereoscopic display, operating in the 3D mode and the 2D mode respectively, according to another embodiment of the invention. In this embodiment, the polarization directions C of a polarizer 132 and an analyzer 133 are parallel to each other. That is, the polarization directions C of the polarizer 132 and the analyzer 133 are parallel to a vertical direction of a display device 131. A first array 134 includes first and second birefringent elements 134a and 134b in the form of stripes of a predetermined width, and arranged in an alternating series. The first birefringent elements 134a may be rotators configured to rotate incident light by -45°, or retarders configured to shift the phase of incident light by -λ/4. The second birefringent elements 134b may be rotators configured to rotate the incident light by +45°, or retarders configured to phase-shift the incident light by +λ/4.

A second array 135 includes third and fourth birefringent elements 135a and 135b having the shape of a stripe with a predetermined width and alternating with each other. The third birefringent elements 135a may be rotators configured to rotate the incident light by +45° or retarders configured to phase-shift the incident light by +λ/4. The fourth birefringent elements 135b may be rotators configured to rotate the incident light by -45°, or retarders configured to phase-shift the incident light by -λ/4.

Referring to Figure 5A, when the autostereoscopic display is operating in the 3D mode, light emitted from the display device 131 is polarized in the vertical direction C by the polarizer 132. A first portion of the light polarized in the vertical direction C is transmitted through the first birefringent elements 134a and the third birefringent elements 135a, or transmitted through the second birefringent elements 134b and the fourth birefringent elements 135b. Since the polarization direction of the first portion of the vertically polarized light is rotated by -45° by the first and fourth birefringent elements 134a and 135b and by +45° by the second and third birefringent elements 134b and 135a, there is no overall change in the polarization of the first portion. Accordingly, the light is transmitted through the analyzer 133.

A second portion of the light polarized in the vertical direction C is transmitted through the first birefringent elements 134a and the fourth birefringent elements 135b, or transmitted through the second birefringent elements 134b and the third birefringent elements 135a. Since the polarization direction of this second portion is rotated by -45° respectively by each of the first and fourth birefringent elements 134a and 135b or +45° by each of the second and third birefringent elements 134b and 135a, the polarization direction of the second portion of the light is rotated by a total of -90° or +90° overall. As a result, the polarization direction of the second portion is made perpendicular to the polarization direction C of the analyzer 133 and thus is blocked from being transmitted through the analyzer 133 when the display is operating in the 3D mode.

Although the first, second, third, and fourth birefringent elements 134a, 134b, 135a, and 135b are described above as being rotators configured to rotate the incident light by ± 45°, the first second, third, and fourth birefringent elements 134a, 134b, 135a, and 135b may be retarders configured to phase-shift the incident light by ±λ/4.

As described above, by displacing the first and second arrays 134 and 135 relative to one another by a distance S, the incident light is transmitted through portions W₃ while being blocked from transmission through portions W₄. In this case, the portions W₄ function as a parallax barrier. The widths of the portions W₃ and W₄ can be determined by the distance S between the first and second arrays 134 and 135, taking into account the loss of light and crosstalk between left-eye images and right-eye images.

In Figure 5B, the first and second arrays 134 and 135 are aligned with each other to realize the full resolution 2D mode. Light emitted from the display device 131 is polarized by the polarizer 132 in the vertical polarization direction C. A first portion of the vertically polarized light is rotated by -45° by the first birefringent elements 134a and is transmitted through the third birefringent elements 135a to be rotated by +45°, such that there is no overall change in the polarization of the first portion and thus the first portion of the light is made to have the same polarization direction as that of the analyzer 133 (i.e., vertical). A second portionof the vertically polarized light is rotated by +45° by the second birefringent elements 134b and rotated by -45° by the fourth birefringent elements 135b, such that there is no overall change in the polarization of the second portionand thus the second portion of the light has the same polarization direction as that of the analyzer 133 (i.e., vertical) in the 2D mode. Accordingly, all light incident on the analyzer 133 is transmitted through the analyzer 133 when the display is operating in the 2D mode.

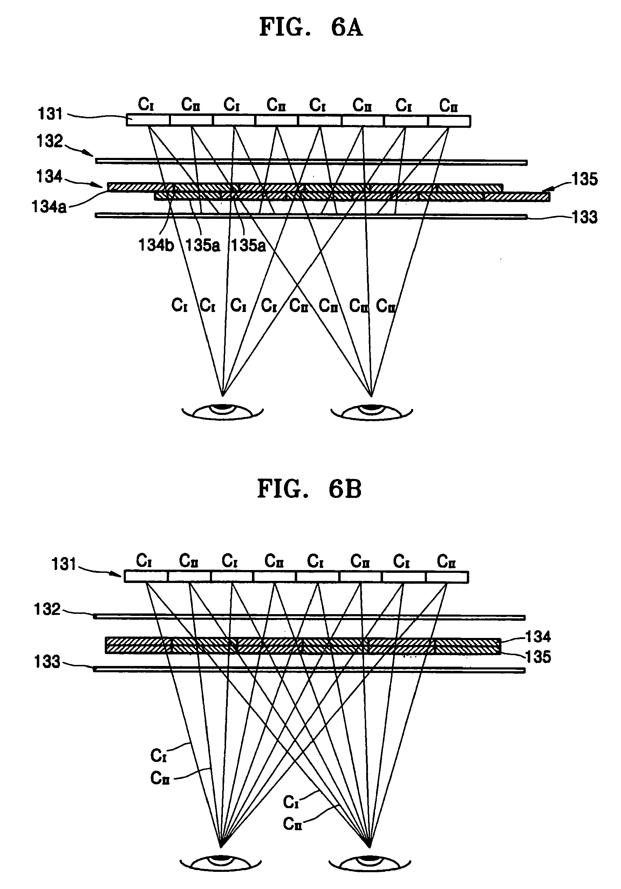

Figures 6A and 6B are cross-sectional views illustrating an optical arrangement of the autostereoscopic display of Figures 5A and 5B when operating in the 3D mode and the 2D mode respectively, according to an embodiment of the invention.

Referring to Figure 6A, pixels of the display device 131 are partitioned into two groups of columns CI and CII to display a stereoscopic image. Accordingly, in the 3D mode, a left-eye image may be displayed using the columns CI, and a right-eye image is displayed using the columns CII. The first and second arrays 134 and 135 include birefringent elements, which may be ±45° rotators or ±λ/4 retarders. In the 3D mode illustrated in Figure 6A, the boundaries between the birefringent elements of the first array 134 are not aligned with the boundaries between the birefringent elements of the second array 135. In the 2D mode illustrated in Figure 6B, these boundaries are aligned with each other. Accordingly, in the 3D mode, light passing through the first and third birefringent elements 134a and 135a and light passing through the second and fourth birefringent elements 134b and 135b is transmitted through the analyzer 133 to reach a viewer's eyes. On the other hand, since polarization directions of light passing through the first and fourth birefringent elements 134a and 135b and light passing through the second and third birefringent elements 134b and 135a are perpendicular to the polarization direction of the analyzer 133, the resulting light cannot be transmitted through the analyzer 133. Accordingly, the polarizer 132, the first and second arrays 134 and 135, and the analyzer 133 can function as a parallax barrier unit in the autostereoscopic display.

Accordingly, among left-eye images provided by the columns CI of the display device 131, images directed toward the viewer's right eye are blocked by the analyzer 133 and images directed toward the viewer's left eye are transmitted through the analyzer 133. Similarly, among right-eye images provided by the columns CII of the display device 131, images directed toward the viewer's left eye are blocked by the analyzer 133 and images directed toward the viewer's right eye are transmitted through the analyzer 134. As a result, the viewer can perceive a stereoscopic image.

Referring to Figure 6B, when operating in the 2D mode, the boundaries between the birefringent elements of the first array 134 and the birefringent elements of the second array 135 are aligned with each other. That is, the first and third birefringent elements 134a and 135a face each other, and the second and fourth birefringent elements 134b and 135b face each other. Thus, the changes in the polarization of the incident light through rotation by the first birefringent elements 134a is compensated by the rotation of the polarization direction caused by the third birefringent elements 135a, so that the polarization of the incident light is unchanged overall. Similarly, the rotation of the polarization direction of the incident light caused by the second birefringent elements 134b is compensated by the rotation of the polarization direction when the same light passes through the fourth birefringent elements 135b. Thus, the parallax barrier is disabled. As a result, the polarization directions of images from the entire display area of the display device 131 match the polarization direction of the analyzer 133, and so images displayed by all pixels of the display device 131 are provided to the viewer's left and right eyes.

In the present embodiment, the display device 131 may be a plasma display panel (PDP) configured to emit non-polarized light or a liquid crystal display (LCD) configured to emit polarized light. When the PDP is used as the display device 131, a polarizer 132 may be used to polarize the non-polarized light. On the other hand, when a LCD is used as the display device 131, the polarizer 132 is not required, since the LCD emits polarized light.

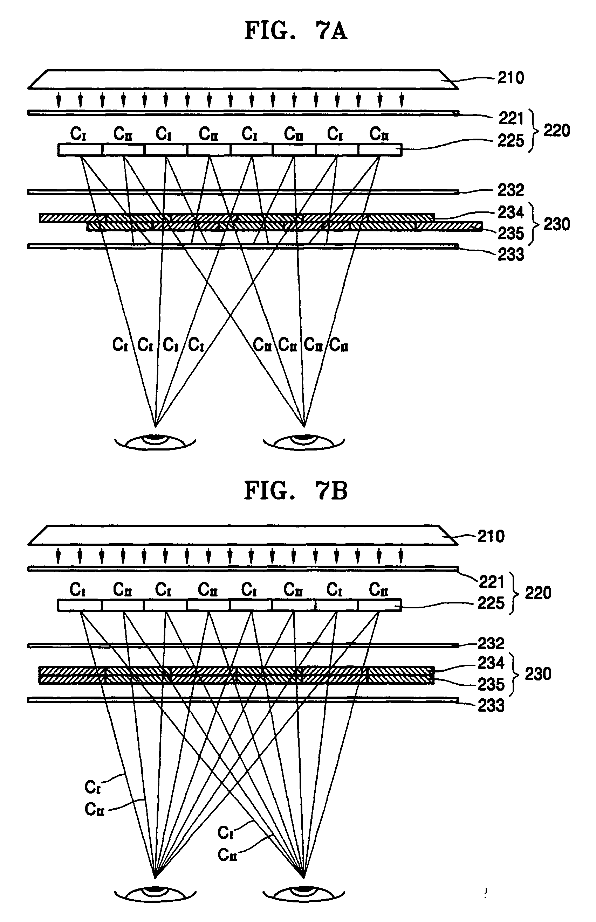

Figures 7A and 7B are cross-sectional views illustrating an optical arrangement of the autostereoscopic display of Figures 3A and 3B, operating in the 3D mode and the 2D mode respectively, according to another embodiment of the invention.

Referring to Figures 7A and 7B, a display device includes a backlight unit 210 disposed behind a parallax barrier unit 230, that selectively forms a barrier, and a display unit 220. The display unit 220 includes a rear polarizer 221, an LCD panel 225, and a front polarizer. The display unit 220 forms an image by selectively driving a plurality of pixels that are arranged in two dimensions to form an image and illuminating the image using the backlight unit 210.

The parallax barrier unit 230 is as illustrated in Figures 3A through 3F. The parallax barrier unit 230 selectively transmits incident light, and includes a polarizer 232, first and second arrays 234 and 235, and an analyzer 233. The polarizer 232 of the parallax barrier unit 230 may be used as the front polarizer of the display unit 220. If this is the case, the front polarizer can be omitted in the display unit 220.

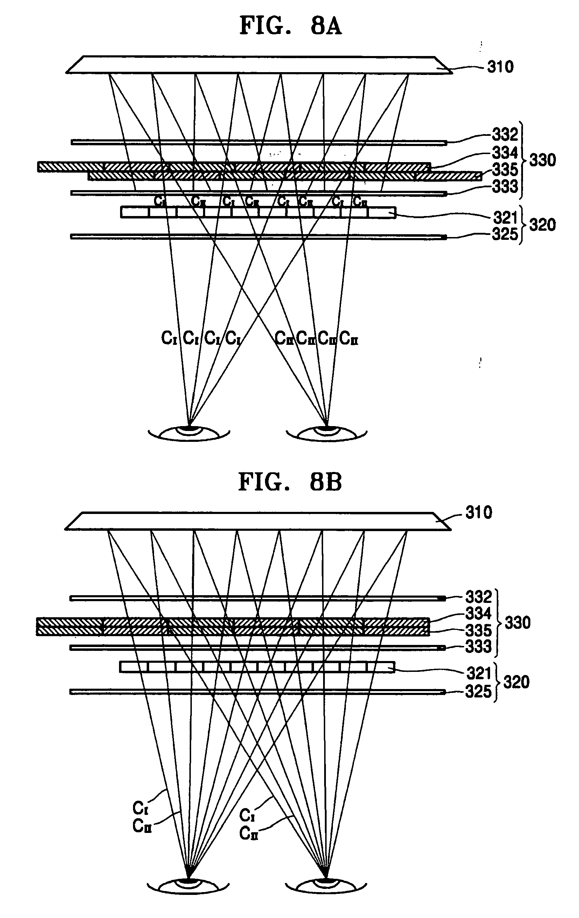

Figures 8A and 8B are cross-sectional views illustrating another optical arrangement of the autostereoscopic display of Figures 3A and 3B and a LCD, operating in the 3D mode and the 2D mode respectively, according to yet another embodiment of the invention.

Referring to Figures 8A and 8B, a backlight unit 310 is disposed behind a parallax barrier unit 330 that selectively forms a barrier, and a display unit 320 is disposed in front of the parallax barrier unit 330.

The parallax barrier unit 330 is as illustrated in Figures 3A through 3F. The parallax barrier unit 330 selectively transmits the incident light and includes a polarizer 332, first and second arrays 334 and 335 and an analyzer 333.

The display unit 320 includes a rear polarizer, a LCD panel 321 and a front polarizer 325. The display unit 320 forms an image by selectively driving a plurality of pixels that are arranged in two dimensions. The image is illuminated using the backlight unit 310.

The analyzer 333 of the parallax barrier unit 330 may be used as the rear polarizer of the display unit 320. Accordingly, the rear polarizer may be omitted in the display unit 320.

Figures 9A and 9B illustrate a mechanism for manually controlling the relative positioning of first and second arrays 434 and 435 using a 2D/3D switch.

Figure 9A illustrates the control mechanism moving the second array 435 relative to the first array 434 by manually controlling the 2D/3D switch. Figure 9B illustrates an amount by which the second array 435 is shifted obliquely.

The first array 434 and the second array 435 have substantially the same shape and/or size and may be shifted relative to one another by an electromechanical or piezoelectric actuator. Alternatively, or additionally, other shifting mechanisms may be used to perform the relative shifting.

In simple, portable, or low cost displays, the relative positions of the first and second arrays 434 and 435 can be adjusted manually.

Where a manual mechanism is used, a knob 451 may be provided to control the relative positions of the first and second arrays 434, 435. The mechanism may be arranged so that the operational travel distance of the knob 451 is large when compared with the effective displacement of the second array 435. When an angle between an operational direction F of the knob 451 and the inclination direction of the second array 435 is Φ, a transversal shift of the second array 435, i.e. the movement of the second array 435 in direction G, is S_{T}, and the displacement of the second array 435 in the inclination direction is Sₛ, Sₛ = S_{T}/sinΦ. So, for example, when S_{T} = 0.1 mm and Φ = 1.5°, the movement in the inclination direction Sₛ = 0.1 /0.026 = 3.8 mm. Accordingly, to achieve a transversal shift of the second array 435 of 0.1 mm( = 100 um), the second array 435 must be moved 3.8 mm in the inclination direction. This movement can easily be done manually.

In the embodiment shown in Figure 9A, the manually switchable parallax barrier is installed in a body of a mobile phone 400. However, it should be understood that the parallax barrier may be used in other devices as well.

In the particular embodiment of Figure 9A, the first array 434 is fixed while the second array 435 is movable. That is, the second array 435 can be shifted in a vertical direction indicated by arrow F and/or a horizontal direction indicated by arrow G by moving the knob 451 in the vertical direction F. An inclination guide 455 is installed on one side of the second array 435, and an elastic member 457 and a latch 459 are disposed on the opposite side of the second array 435. The elastic member 457 resiliently biases the second array 435 toward the inclination guide 455, and the latch 459 is arranged to latch the movable second array 435 at appropriate positions for respective 2D and 3D modes. Where the amount by which the knob 451 is moved in the direction F is S_{L}, the inclination angle is Φ, and the transversal shift is S_{T}, S_{L} = S_{T}/tanΦ. For example, when S_{T} = 0.1 mm and Φ = 1.5°, S_{L} = 0.1/0.026 = 3.8 mm. In other words, when the knob 451 is moved by a distance of 3.8 mm, the effective transversal shift is 0.1 mm(= 100 um). The required transversal shift can thus easily be achieved manually.

Since the autostereoscopic display according to the various embodiments of the invention described above can be switched between a 2D mode and a 3D mode by shifting polarization rotators or polarization retarders, the mode switch can be conducted within a small space. Thus, the autostereoscopic displays of the embodiments may be smaller structures, or require less surrounding free space, than the prior art displays discussed above.

When the arrays are manually shifted by approximately 100 um to switch modes, a required operational travel distance of a knob can be increased by causing the arrays to move obliquely, relative to one anothermovement. This feature facilitates manual control of the autostereoscopic display using the knob. Additionally, or alternatively, the 2D and 3D modes can easily be switched by driving the arrays, which selectively form a parallax barrier, using an electromechanical or piezoelectric actuator.

Although a few embodiments of the invention have been shown and described, it will be appreciated by those skilled in the art that changes may be made in these embodiments without departing from the principles of the invention, the scope of which is defined in the appended claims.

## Claims

1. An autostereoscopic display, comprising:
a display device (31) arranged to display an image; and
a switchable parallax barrier unit, the switchable parallax barrier unit comprising:
a polarizer (32) configured to transmit light having a first polarization direction;
a first array (34) including first birefringent elements (34a) configured to change the polarization direction of light transmitted through the polarizer (32) by rotating the polarization direction of said light by a first amount in a first sense, and second birefringent elements (34b) configured to change the polarization direction of light transmitted through the polarizer by rotating the polarization direction of said light by the first amount in a second sense that is opposite to the first sense, the first and second birefringent elements (34a, 34b) being arranged in an alternating series;
a second array (35) including third birefringent elements (35a) configured to change a polarization direction of light transmitted through the first array by rotating the polarization direction of said light by the first amount in the first sense, and fourth birefringent elements (35b) configured to change the polarization direction of light transmitted through the first array by rotating the polarization direction of said light by the first amount in the second sense, the third and fourth birefringent elements (35a, 35b) being arranged in an alternating series, and
an analyzer (33) arranged to transmit only light from the second array having a second polarization direction;
wherein at least one of the first and second arrays is movable to adjust the positions of the first and second birefringent elements (34a, 34b) relative to the third and fourth birefringent elements (35a, 35b), and
wherein the switchable parallax barrier unit is configured such that, when it is operating in a 2D mode, the first, second, third and fourth birefringent elements (34a, 34b, 35a, 35b) are arranged so that incident light from all pixels of the display device (31) are transmitted as a 2D image to the viewer's left and right eyes and, when operating in a 3D mode, the first, second, third and fourth birefringent elements (34a, 34b, 35a, 35b) are arranged so that the incident light from the display device (31) is separated into a first image and a second image.

2. An autostereoscopic display according to claim 1, wherein the first birefringent elements (34a) and the second birefringent elements (34b) comprise rotators configured to rotate the polarization direction of incident light by +(2n+1)x45° and -(2n+1)x45°, respectively, where n=0, 1, 2, 3, ....

3. An autostereoscopic display according to claim 1, wherein the first birefringent elements (34a) and the second birefringent elements (34b) comprise retarders configured to shift the phase of incident light by +(2n+1)λ/4 and - (2n+1)λ/4, respectively, where λ denotes a wavelength of incident light and n=0,1,2,3,....

4. An autostereoscopic display according to claim 1, 2 or 3, wherein the third birefringent elements (35a) and the fourth birefringent elements (35b) comprise rotators configured to rotate the polarization direction incident light by ±(2*n*+1)×45° and ∓(2*n*+1)×45°, respectively, where n=0, 1, 2, 3, ....

5. An autostereoscopic display according to claim 1, 2 or 4, wherein the third birefringent elements (35a) and the fourth birefringent elements (35b) comprise retarders configured to shift the phase of incident light by ±(2n+1)λ/4 and ∓(2*n*+1)λ/4, where λ denotes a wavelength of incident light and n=0, 1, 2, 3,

6. An autostereoscopic display according to any one of the preceding claims, configured so that the first predetermined polarization direction and the second predetermined polarization direction are parallel or perpendicular to each other.

7. An autostereoscopic display according to any one of the preceding claims, wherein the first, second, third, and fourth birefringent elements (34a, 34b, 35a, 35b) are configured as strips elongated in a direction that is parallel to the first predetermined polarization direction.

8. An autostereoscopic display according to claim 7, wherein said at least one of the first and second arrays (34, 35) is moveable in a direction that is slanted with respect to the direction in which the first second, third, and fourth birefringent elements (34a, 34b, 35a, 35b) are elongated.

9. An autostereoscopic display according to any one of claims 1 to 6, wherein the first, second, third, and fourth birefringent elements (34a, 34b, 35a, 35b) are arranged as strips (41, 43) elongated in a direction that is slanted at a first inclination angle with respect to the first predetermined polarization direction.

10. An autostereoscopic display according to claim 9, wherein said at least one of the first and second arrays (34, 35) is movable in a direction that is slanted at a second inclination angle, with respect to the first predetermined polarization direction, wherein said second inclination angle is not equal to the first inclination angle.

11. An autostereoscopic display according to any one of claims 1 to 6, wherein the first and second arrays (34, 35) are two-dimensional arrays of birefringent portions (45, 47) arranged in a stepwise manner.

12. An autostereoscopic display according to any one of the preceding claims, arranged to permit said at least one of the first and second arrays (34, 35) to be moved manually.

13. An autostereoscopic display according to any one of claims 1 to 11, comprising an electromechanical or piezoelectric actuator arranged to provide movement of said at least one of the first and second arrays (34, 35).

14. An autostereoscopic display according to any one of the preceding claims, wherein the display device (31) includes a two dimensional array of pixels and is arranged so that each pixel can emit light independently.

15. An autostereoscopic display according to claim 14, wherein the display device (31) comprises a plasma display panel.

16. An autostereoscopic display according to any one of claims 1 to 13, wherein the display device (220) comprises:
a backlight unit (210) arranged to emit light,
a rear polarizer (221) configured to transmit light having a third predetermined polarization direction, and
a liquid crystal display panel (225) having pixels arranged to change the polarization of light from the rear polarizer (221) into a predetermined LCD polarization to display the image;
wherein the parallax barrier unit (230) is disposed between the liquid crystal display panel (225) and a viewing zone, such that the polarizer (232) of the parallax barrier unit (230) acts a front polarizer of the display device (220).

17. An autostereoscopic display according to any one of claims 1 to 13, wherein the display device (320) comprises:
a backlight unit (310) arranged to emit light,
a liquid crystal display panel (321) having pixels arranged to convert a polarization of light from the backlight unit (310) into a predetermined LCD polarization to display the image, and
a front polarizer (325) configured to transmit only light from the liquid crystal display panel (321) having a predetermined front polarizer polarization direction; wherein the parallax barrier unit (330) is disposed between the backlight unit (310) and the liquid crystal display panel (321), such that the analyzer (333) of the parallax barrier unit is used as a rear polarizer of the display device (320).

18. A mobile telephone (400) comprising an autostereoscopic display according to any one of the preceding claims.

## Patentansprüche

1. Autostereoskopische Anzeigevorrichtung, die umfasst:
eine Anzeigeeinrichtung (31), die zum Anzeigen eines Bildes eingerichtet ist; und
eine umschaltbare Parallaxen-Sperreinheit, wobei die umschaltbare Parallaxen-Sperreinheit umfasst:
eine Polarisationseinrichtung (32), die so konfiguriert ist, dass sie Licht mit einer ersten Polarisationsrichtung durchlässt;
eine erste Anordnung (34), die erste doppelbrechende Elemente (34a), die so konfiguriert sind, dass sie die Polarisationsrichtung von durch die Polarisationseinrichtung (32) durchgelassenem Licht ändern, indem sie die Polarisationsrichtung des Lichtes um einen ersten Betrag in einer ersten Richtung drehen, sowie zweite doppelbrechende Elemente (34b) enthält, die so konfiguriert sind, dass sie die Polarisationsrichtung von durch die Polarisationseinrichtung durchgelassenem Licht ändern, indem sie die Polarisationsrichtung des Lichtes um den ersten Betrag in einer zweiten Richtung ändern, die der ersten Richtung entgegengesetzt ist, wobei die ersten und die zweiten doppelbrechenden Elemente (34a, 34b) in einer abwechselnden Reihe angeordnet sind;
eine zweite Anordnung (35), die dritte doppelbrechende Elemente (35a), die so konfiguriert sind, dass sie eine Polarisationsrichtung von durch die erste Anordnung hindurchgelassenem Licht ändern, indem sie die Polarisationsrichtung des Lichtes um den ersten Betrag in der ersten Richtung drehen, und vierte doppelbrechende Elemente (35b) enthält, die so konfiguriert sind, dass sie die Polarisationsrichtung von durch die erste Anordnung durchgelassenem Licht ändern, indem sie die Polarisationsrichtung des Lichtes um den ersten Betrag in der zweiten Richtung drehen, wobei die dritten und die vierten doppelbrechenden Elemente (35a, 35b) in einer abwechselnden Reihe angeordnet sind, und
einen Analysator (33), der nur Licht von der zweiten Anordnung mit einer zweiten Polarisationsrichtung durchlässt;
wobei wenigstens die erste oder die zweite Anordnung bewegt werden kann, um die Positionen der ersten und der zweiten doppelbrechenden Elemente (34a, 34b) relativ zu den dritten und den vierten doppelbrechenden Elementen (35a, 35b) zu verstellen, und
wobei die umschaltbare Parallaxen-Sperreinheit so konfiguriert ist, dass, wenn sie in einem 2D-Modus arbeitet, die ersten, zweiten, dritten und vierten doppelbrechenden Elemente (34a, 34b, 35a, 35b) so angeordnet sind, dass von allen Pixeln der Anzeigeeinrichtung (31) auftreffendes Licht als ein 2D-Bild zu dem linken und dem rechten Auge des Betrachters durchgelassen wird, und, wenn sie in einem 3D-Modus arbeitet, die ersten, zweiten, dritten und vierten doppelbrechenden Elemente (34a, 34b, 35a, 35b) so angeordnet sind, dass das von der Anzeigeeinrichtung (31) auftreffende Licht in ein erstes Bild und ein zweites Bild getrennt wird.

2. Autostereoskopische Anzeigevorrichtung nach Anspruch 1, wobei die ersten doppelbrechenden Elemente (34a) und die zweiten doppelbrechenden Elemente (34b) Rotatoren umfassen, die so konfiguriert sind, dass sie die Polarisationsrichtung von auftreffendem Licht um +(2n+1) x 45° bzw. -(2n+1) x 45° drehen, wobei n = 0, 1, 2, 3, ....

3. Autostereoskopische Anzeigevorrichtung nach Anspruch 1, wobei die ersten doppelbrechenden Elemente (34a) und die zweiten doppelbrechenden Elemente (34b) Verzögerungseinrichtungen umfassen, die so konfiguriert sind, dass sie die Phase von auftreffendem Licht um +(2n+1)λ/4 bzw. -(2n+1)λ/4 verschieben, wobei λ eine Wellenlänge von auftreffendem Licht bezeichnet und n = 0, 1, 2, 3, ....

4. Autostereoskopische Anzeigevorrichtung nach Anspruch 1, 2 oder 3, wobei die dritten doppelbrechenden Elemente (35a) und die vierten doppelbrechenden Elemente (35b) Rotatoren umfassen, die so konfiguriert sind, dass sie die Polarisationsrichtung von auftreffendem Licht um ±(2n+1) x 45° bzw. ∓(2n+1) x 45° drehen, wobei n = 0,1, 2, 3, ....

5. Autostereoskopische Anzeigevorrichtung nach Anspruch 1, 2 oder 4, wobei die dritten doppelbrechenden Elemente (35a) und die vierten doppelbrechenden Elemente (35b) Verzögerungseinrichtungen umfassen, die so konfiguriert sind, dass sie die Phase von auftreffendem Licht um ±(2n+1)λ/4 und ∓(2n+1)λ/4 verschieben, wobei λ eine Wellenlänge von auftreffendem Licht bezeichnet und n = 0, 1, 2, 3, ....

6. Autostereoskopische Anzeigevorrichtung nach einem der vorangehenden Ansprüche, die so konfiguriert ist, dass die erste vorgegebene Polarisationsrichtung und die zweite vorgegebene Polarisationsrichtung parallel oder senkrecht zueinander sind.

7. Autostereoskopische Anzeigevorrichtung nach einem der vorangehenden Ansprüche, wobei die ersten, zweiten, dritten und vierten doppelbrechenden Elemente (34a, 34b, 35a, 35b) als Streifen ausgeführt sind, die sich in einer Richtung erstrecken, die parallel zu der ersten vorgegebenen Polarisationsrichtung ist.

8. Autostereoskopische Anzeigevorrichtung nach Anspruch 7, wobei die wenigstens eine von der ersten und der zweiten Anordnung (34, 35) in einer Richtung bewegt werden kann, die in Bezug auf die Richtung geneigt ist, in der sich die ersten, zweiten, dritten und vierten doppelbrechenden Elemente (34a, 34b, 35a, 35b) erstrecken.

9. Autostereoskopische Anzeigevorrichtung nach einem der Ansprüche 1 bis 6, wobei die ersten, zweiten, dritten und vierten doppelbrechenden Elemente (34a, 34b, 35a, 35b) als Streifen (41, 43) angeordnet sind, die sich in einer Richtung erstrecken, die in einem ersten Neigungswinkel in Bezug auf die erste vorgegebene Polarisationsrichtung geneigt ist.

10. Autostereoskopische Anzeigevorrichtung nach Anspruch 9, wobei die wenigstens eine von der ersten und zweiten Anordnung (34, 35) in einer Richtung bewegt werden kann, die in einem zweiten Neigungswinkel in Bezug auf die erste Polarisationsrichtung geneigt ist, wobei der zweite Neigungswinkel dem ersten Neigungswinkel nicht gleich ist.

11. Autostereoskopische Anzeigevorrichtung nach einem der Ansprüche 1 bis 6, wobei die ersten und zweiten Anordnungen (34, 35) zweidimensionale Anordnungen doppelbrechender Abschnitte (45, 47) sind, die stufenweise angeordnet sind.

12. Autostereoskopische Anzeigevorrichtung nach einem der vorangehenden Ansprüche, die so eingerichtet ist, dass sie zulässt, dass die wenigstens eine von der ersten und zweiten Vorrichtung (34, 35) manuell bewegt wird.

13. Autostereoskopische Anzeigevorrichtung nach einem der Ansprüche 1 bis 11, die einen elektromechanischen oder piezoelektrischen Aktor umfasst, der so eingerichtet ist, dass er Bewegung der wenigstens einen von der ersten und zweiten Anordnung (34, 35) bewirkt.

14. Autostereoskopische Anzeigevorrichtung nach einem der vorangehenden Ansprüche, wobei die Anzeigeeinrichtung (31) eine zweidimensionale Anordnung von Pixeln enthält und so eingerichtet ist, dass jedes Pixel Licht unabhängig emittieren kann.

15. Autostereoskopische Anzeigevorrichtung nach Anspruch 14, wobei die Anzeigevorrichtung (31) einen Plasmabildschirm umfasst.

16. Autostereoskopische Anzeigevorrichtung nach einem der Ansprüche 1 bis 13, wobei die Anzeigeeinrichtung (220) umfasst:
eine Hintergrundbeleuchtungseinheit (210), die zum Emittieren von Licht eingerichtet ist,
einen hinteren Polarisator (221), der so konfiguriert ist, dass er Licht mit einer dritten vorgegebenen Polarisationsrichtung durchlässt, und
einen Flüssigkristallbildschirm (225), der Pixel aufweist, die so eingerichtet sind, dass sie die Polarisation von Licht von dem hinteren Polarisator (221) in eine vorgegebene LCD-Polarisation ändern, um das Bild anzuzeigen;
wobei die Parallaxen-Sperreinheit (230) zwischen dem Flüssigkristallbildschirm (225) und einer Betrachtungszone so angeordnet ist, dass der Polarisator (232) der Parallaxen-Sperreinheit (230) als ein vorderer Polarisator der Anzeigeeinrichtung (220) wirkt.

17. Autostereoskopische Anzeigevorrichtung nach einem der Ansprüche 1 bis 13, wobei die Anzeigeeinrichtung (320) umfasst:
eine Hintergrundbeleuchtungseinheit (310), die zum Emittieren von Licht eingerichtet ist,
einen Flüssigkristallbildschirm (321), der Pixel aufweist, die so eingerichtet sind, dass sie eine Polarisation von Licht von der Hintergrundbeleuchtungseinheit (310) in eine vorgegebene LCD-Polarisation umwandeln, um das Bild anzuzeigen; und
einen vorderen Polarisator (325), der so konfiguriert ist, dass er nur Licht von dem Flüssigkristallbildschirm (321) mit einer vorgegebenen Polarisationsrichtung des vorderen Polarisators durchlässt, wobei die Parallaxen-Sperreinheit (330) zwischen der Hintergrundbeleuchtungseinheit (310) und dem Flüssigkristallbildschirm (321) so angeordnet ist, dass der Analysator (333) der Parallaxen-Sperreinheit als ein hinterer Polarisator der Anzeigeeinrichtung (320) dient.

18. Mobiltelefon (400), das eine autostereoskopische Anzeigevorrichtung nach einem der vorangehenden Ansprüche umfasst.

## Revendications

1. Affichage autostéréoscopique, comprenant :
un dispositif d'affichage (31) agencé pour afficher une image ; et
une unité de barrière parallaxe commutable, l'unité de barrière parallaxe commutable comprenant :
un polariseur (32) configuré pour transmettre de la lumière ayant une première direction de polarisation ;
un premier réseau (34) comprenant des premiers éléments biréfringents (34a), configurés pour changer la direction de polarisation de la lumière transmise à travers le polariseur (32) en faisant tourner la direction de polarisation de ladite lumière d'une première quantité dans un premier sens, et des deuxièmes éléments biréfringents (34b) configurés pour changer la direction de polarisation de la lumière transmise à travers le polariseur en faisant tourner la direction de polarisation de ladite lumière de la première quantité dans un second sens qui est opposé au premier sens, les premiers et deuxièmes éléments biréfringents (34a, 34b) étant agencés en série en alternance ;
un second réseau (35) comprenant des troisièmes éléments biréfringents (35a) configurés pour changer une direction de polarisation de la lumière transmise à travers le premier réseau en faisant tourner la direction de polarisation de ladite lumière de la première quantité dans le premier sens, et des quatrièmes éléments biréfringents (35b) configurés pour changer la direction de polarisation de la lumière transmise à travers le premier réseau en faisant tourner la direction de polarisation de ladite lumière de la première quantité dans le second sens, les troisièmes et quatrièmes éléments biréfringents (35a, 35b) étant agencés en série en alternance, et
un analyseur (33) agencé pour ne transmettre que la lumière provenant du second réseau ayant une seconde direction de polarisation ;
dans lequel au moins l'un du premier et du second réseau est mobile pour ajuster les positions des premiers et deuxièmes éléments biréfringents (34a, 34b) par rapport aux troisièmes et quatrièmes éléments biréfringents (35a, 35b), et
dans lequel l'unité de barrière parallaxe commutable est configurée de telle sorte que, lorsqu'elle fonctionne dans un mode en 2D, les premiers, deuxièmes, troisièmes et quatrièmes éléments biréfringents (34a, 34b, 35a, 35b) sont agencés de telle sorte que la lumière incidente provenant de tous les pixels du dispositif d'affichage (31) est transmise sous forme d'image en 2D aux yeux de d'observation gauche et droit et, lorsqu'elle fonctionne dans un mode en 3D, les premiers, deuxièmes, troisièmes et quatrièmes éléments biréfringents (34a, 34b, 35a, 35b) sont agencés de telle sorte que la lumière incidente provenant du dispositif d'affichage (31) est séparée en une première image et une seconde image.

2. Affichage autostéréoscopique selon la revendication 1, dans lequel les premiers éléments biréfringents (34a) et les deuxièmes éléments biréfringents (34b) comprennent des rotateurs configurés pour faire tourner la direction de polarisation de la lumière incidente de +(2n + 1) x 45° et -(2n + 1) x 45°, respectivement, où n = 0, 1, 2, 3, ...

3. Affichage autostéréoscopique selon la revendication 1, dans lequel les premiers éléments biréfringents (34a) et les deuxièmes éléments biréfringents (34b) comprennent des retardateurs configurés pour déphaser la lumière incidente de + (2n + 1)λ/4 et - (2n + 1)λ/4, respectivement, où λ indique une longueur d'onde de lumière incidente et n = 0, 1, 2, 3, ...

4. Affichage autostéréoscopique selon la revendication 1, 2 ou 3, dans lequel les troisièmes éléments biréfringents (35a) et les quatrièmes éléments biréfringents (35b) comprennent des rotateurs configurés pour faire tourner la direction de polarisation de la lumière incidente de ± (2n + 1) x 45° et de ∓ (2n + 1) x 45°, respectivement, où n = 0, 1, 2, 3, ....

5. Affichage autostéréoscopique selon la revendication 1, 2 ou 4, dans lequel les troisièmes éléments biréfringents (35a) et les quatrièmes éléments biréfringents (35b) comprennent des retardateurs configurés pour déphaser la lumière incidente de ± (2n + 1) λ/4 et de ∓ (2n + 1) λ/4, où λ indique une longueur d'onde de lumière incidente et n = 0, 1, 2, 3, ....

6. Affichage autostéréoscopique selon l'une quelconque des revendications précédentes, configuré de telle sorte que la première direction de polarisation prédéterminée et la seconde direction de polarisation prédéterminée soient parallèles ou perpendiculaires l'une par rapport à l'autre.

7. Affichage autostéréoscopique selon l'une quelconque des revendications précédentes, dans lequel les premiers, deuxièmes, troisièmes et quatrièmes éléments biréfringents (34a, 34b, 35a, 35b) sont configurés sous forme de bandes allongées dans une direction qui est parallèle à la première direction de polarisation prédéterminée.

8. Affichage autostéréoscopique selon la revendication 7, dans lequel ledit au moins un des premier et deuxième réseaux (34, 35) est mobile dans une direction qui est inclinée par rapport à la direction dans laquelle les premiers, deuxièmes, troisièmes et quatrièmes éléments biréfringents (34a, 34b, 35a, 35b) sont allongés.

9. Affichage autostéréoscopique selon l'une quelconque des revendications 1 à 6, dans lequel les premiers, deuxièmes, troisièmes et quatrièmes éléments biréfringents (34a, 34b, 35a, 35b) sont agencés sous forme de bandes (41, 43) allongées dans une direction qui est inclinée selon un premier angle d'inclinaison par rapport à la première direction de polarisation prédéterminée.

10. Affichage autostéréoscopique selon la revendication 9, dans lequel ledit au moins un des premier et deuxième réseaux (34, 35) est mobile dans une direction qui est inclinée selon un second angle d'inclinaison, par rapport à la première direction de polarisation prédéterminée, dans lequel ledit second angle d'inclinaison n'est pas égal au premier angle d'inclinaison.

11. Affichage autostéréoscopique selon l'une quelconque des revendications 1 à 6, dans lequel les premier et deuxième réseaux (34, 35) sont des réseaux bidimensionnels de parties biréfringentes (45, 47) agencées par paliers.

12. Affichage autostéréoscopique selon l'une quelconque des revendications précédentes, agencé pour permettre audit au moins un des premier et deuxième réseaux (34, 35) d'être déplacé manuellement.

13. Affichage autostéréoscopique selon l'une quelconque des revendications 1 à 11, comprenant un actionneur électromécanique ou piézoélectrique agencé pour permettre le mouvement dudit au moins un des premier et second réseaux (34, 35).

14. Affichage autostéréoscopique selon l'une quelconque des revendications précédentes, dans lequel le dispositif d'affichage (31) comprend un réseau bidimensionnel de pixels et est agencé de telle sorte que chaque pixel peut émettre la lumière indépendamment.

15. Affichage autostéréoscopique selon la revendication 14, dans lequel le dispositif d'affichage (31) comprend un écran d'affichage plasma.

16. Affichage autostéréoscopique selon l'une quelconque des revendications 1 à 13, dans lequel le dispositif d'affichage (220) comprend :
une unité de rétroéclairage (210) agencée pour émettre de la lumière,
un polariseur arrière (221) configuré pour transmettre de la lumière ayant une troisième direction de polarisation prédéterminée, et
un écran à cristaux liquides (225) ayant des pixels agencés pour changer la polarisation de la lumière à partir du polariseur arrière (221) en une polarisation LCD prédéterminée pour afficher l'image ;
dans lequel l'unité de barrière parallaxe (230) est disposée entre l'écran à cristaux liquides (225) et une zone de visualisation, de telle sorte que le polariseur (232) de l'unité de barrière parallaxe (230) sert de polariseur frontal du dispositif d'affichage (220).

17. Affichage autostéréoscopique selon l'une quelconque des revendications 1 à 13, dans lequel le dispositif d'affichage (320) comprend :
une unité de rétroéclairage (310) agencée pour émettre de la lumière,
un écran à cristaux liquides (321) ayant des pixels agencés pour convertir une polarisation de la lumière à partir de l'unité de rétroéclairage (310) en une polarisation LCD prédéterminée pour afficher l'image, et
un polariseur frontal (325) configuré pour ne transmettre que la lumière provenant de l'écran à cristaux liquides (321) ayant une direction de polarisation de polariseur frontal prédéterminée ; dans lequel l'unité de barrière parallaxe (330) est disposée entre l'unité de rétroéclairage (310) et l'écran à cristaux liquides (321), de telle sorte que l'analyseur (333) de l'unité de barrière parallaxe est utilisé en tant que polariseur arrière du dispositif d'affichage (320).

18. Téléphone mobile (400) comprenant un affichage autostéréoscopique selon l'une quelconque des revendications précédentes.
